# EUROPEAN PATENT APPLICATION

(11) **EP 4 442 799 A1**
(43) Date of publication of application: **09.10.2024**
(21) Application number: 23821466.2
(22) Date of filing: 14.11.2023
(51) Int. Cl.: C11D 10/04

(54) **ODOR-REMOVING ULTRA-CONCENTRATED LIQUID DETERGENT COMPOSITION AND PREPARATION METHOD THEREFOR**

(30) Priority: 22.02.2023 CN 202310151800
(71) Applicant: Guangdong Youkai Technical Co., Ltd., Foshan, Guangdong 528200 (CN)
(72) Inventor: WANG, Ximei, Foshan, Guangdong 528200 (CN); WANG, Quanwei, Foshan, Guangdong 528200 (CN); WANG, Xinquan, Foshan, Guangdong 528200 (CN); HUANG, Ping, Foshan, Guangdong 528200 (CN)
(74) Representative: Cueto, Sénida
(86) International application number: PCT/CN2023/131401
(87) International publication number: WO 2024/174597

(57) **Abstract**

Provided is a super-concentrated liquid detergent composition for removing odor, including the following components in percent by weight: 50-80 wt% of a surfactant, 0.1-10 wt% of zinc diricinoleate, 0.1-10 wt% of a modified zinc complex, 0.1-5 wt% of nuclease, 0.1-10 wt% of an auxiliary agent, and a solvent, where the modified zinc complex is obtained by reaction of flavone, zinc ions, amino acid and halide. The present invention provides a super-concentrated liquid detergent composition for removing odor, which contains the zinc ricinoleate, the modified zinc complex and the nuclease, featuring excellent detergency and deodorization effects achieved through a synergistic effect among a plurality of components.

## Description

### TECHNICAL FIELD

The present invention belongs to the technical field of daily chemical detergent products, and particularly relates to a super-concentrated liquid detergent composition for removing odor and a preparation method thereof.

### BACKGROUND

China's home care market size has exceeded RMB120 billion and keeps growing steadily, and laundry detergents have become the largest segment of home care, accounting for more than 55% of the total market share. With increasingly complicated demands for laundry care, consumers not only pursue cleaning and detergency, sterilization and mite removal, and natural freshness, but also gradually bring forward additional diversified needs for occasions and functions.

Market analysis reveals that smell is crucial to consumers. Newly-launched detergents in China with a claimed function of "odor elimination" have increased by 67% over the past five years, but their effectiveness remains insufficient. Specifically, these detergents have such main deficiencies as difficulty to remove strong odors, failure to remove odors for a long period of time, recurring odors, unpleasant smell of clothes when they are dried in the shade, sweaty smell of freshly washed clothes, and failure to remove stains completely, resulting in yellowing and hardening of fabrics on collars and underarms. The main culprit that creates trouble for consumers is human secretion.

Existing washing technology adopts he following solutions to cope with the above problems: 1. using essence to cover up/neutralize the odor, so that the odor cannot be smelt for the time being; and 2. using disinfectant/bleach to kill bacteria and temporarily relieve the odor, but without removing the secretion, both of which only scratch the surface, resulting in reoccurrence of the problem.

Another existing problem is that common order-removal products always contain zinc diricinoleate, and super-concentrated liquid detergents with increased surfactant content will make compatibility with zinc ricinoleate poorer, resulting in significant reduction of capability to remove the odor. Therefore, the prior art is unable to effectively remove the human secretions accumulated over time.

To sum up, there is an urgent need to design a liquid detergent with both good deodorization and dirt removal effects to overcome the above defects.

### SUMMARY

In view of the forgoing technical problems, the present invention provides a super-concentrated liquid detergent composition for removing odor, which contains zinc ricinoleate, modified zinc complex and nuclease, and has excellent detergency and deodorization effects achieved through the synergy among a plurality of components.

An objective of the present invention is to provide a super-concentrated liquid detergent composition for removing odor, and the composition includes the following components in percent by weight:

| | |
|---|---|
| A surfactant | 50-80 wt% |
| Zinc diricinoleate | 0.1-10 wt% |
| A modified zinc complex | 0.1-10 wt% |
| Nuclease | 0.1-5 wt% |
| An auxiliary agent | 0.1-10 wt% |
| A solvent | |

where the modified zinc complex is obtained by the action of flavone, zinc ions, amino acid and halide.

Further, a preparation method of the modified zinc complex includes the following steps:
S1. adding lysine and potassium chloride to deionized water, and stirring evenly;
S2. adding flavone and stirring to obtain a mixed solution; and
S3. adding zinc ions to the mixed solution, carrying out ultrasonic treatment, and centrifuging and drying to obtain a modified zinc complex.

Further, the flavone is selected from rutin, quercetin, baicalein, baicalin, glucoside, nobiletin and myricetin.

Further, a mass ratio of the zinc ions to the amino acids to the halides and to the flavone is (0.1-10) : (0.1-5): (0.05-3): 1.

Further, the amino acid is selected from one or more of glycine, alanine, phenylalanine, glutamic acid, sarcosine, arginine, lysine and histidine.

Further, the halide is selected from at least one of fluoride and chloride.

Further, the surfactant is selected from one or more of an anionic surfactant, a nonionic surfactant, an amphoteric surfactant, a cationic surfactant and fatty acid.

The anionic surfactant can be but is not limited to: one or more of sulfonate surfactant, carboxylate surfactant, and sulfate surfactant; and preferably, it can be selected from one or more of alkylbenzene sulfonate, C8-C18 alkyl sulfonate, C8-C18 ethoxylated fatty alcohol sodium sulfate, fatty acid alkyl ester sulfonate, and ethoxylated fatty alcohol ether carboxylate.

The nonionic surfactant can be but is not limited to one or more of fatty alcohol polyoxyethylene ether, fatty alcohol alkoxylate, fatty acid ethoxylate and fatty acid alkyl alcohol amide.

Further, the nuclease is selected from one or more of ribonuclease and deoxyribonuclease.

Further, the auxiliary agent is selected from one or more of a preservative, a pH regulator, a chelating agent, an essence and a pigment.

Another objective of the present invention is to provide a preparation method of the super-concentrated liquid detergent composition for removing odor, and the method includes the following steps:
L1. adding the zinc diricinoleate and the nuclease to deionized water to obtain a mixture, and stirring the mixed solution evenly to add the modified zinc complex to obtain a solution 1;
adding alkali and the surfactant to a reaction kettle and stirred evenly to obtain a solution 2; and
L2. adding the solution 1 to the solution 2 and stirring evenly to obtain a super-concentrated liquid detergent composition for removing odor.

Further, a mass ratio of the modified zinc complex to the nuclease is (1:1) - (10:1).

Further, the solvent is selected from one or more of water, ethanol, glycerol, propylene glycol, sorbitol, polyethylene glycol, diethylene glycol monobutyl ether, dipropylene glycol methyl ether, tripropylene glycol methyl ether, diethyleneglycol monobutyl ether acetate, dipropylene glycol butyl ether and tripropylene glycol butyl ether.

The present disclosure has the following beneficial effects:
1. The super-concentrated liquid detergent composition for removing odor provided in the present invention contains zinc ricinoleate, modified zinc complex and nuclease, the three components can produce a synergistic effect, the zinc ricinoleate is loaded and bound with the nuclease, and the zinc ricinoleate and the nuclease are crosslinked through chemical bonds to form an inner core structure. The modified zinc complex has good compatibility and further coats the inner core to form a stable and uniform outer layer, and a structure featuring strong stability is accordingly formed, such that particles containing the nuclease exist stably in the composition for a long period of time, and the inactivation and invalidation of active substances are avoided.
2. The modified zinc complex prepared by flavone and amino acid in the present invention features good solubility, and the modified zinc complex at the outer layer gradually dissolves and releases enzyme and zinc ricinoleate components in the washing process, so that stains such as human body secretions, odorous molecules and the like, can be removed. At the same time, the modified zinc complex is capable to adjust an action rate of the enzyme, such that action time of the enzyme is greatly prolonged, and technical effects of deep decontamination and long-term deodorization are achieved, proving a significant improvement over the prior art.

### DETAILED DESCRIPTION OF EMBODIMENTS

In order to more clearly illustrate the technical solution in the present disclosure, the following embodiments are enumerated. Unless otherwise specified, raw materials, reactions and post-treatment method stated in the embodiments are all common commercially available raw materials and technical means known to those skilled in the art.

A preparation method of a modified zinc complex in the embodiments of the present invention includes the following steps:
S1. lysine and potassium chloride were added to deionized water, and then stirred evenly;
S2. quercetin was added and stirred to obtain a mixed solution; and
S3. zinc oxalate was added to the mixed solution, ultrasonic treatment was performed for 2 min, and centrifugation and drying treatment was performed to obtain a modified zinc complex;
where zinc ions : lysine : potassium chloride : quercetin = 2 : 1 : 1 : 1, in m/m/m/m.

Components of liquid detergent compositions and mass fractions thereof in the embodiments and comparative embodiments in the present invention are shown in Table 1.

**Table 1 Components of Liquid Detergent Compositions and Mass Fractions Thereof in the Embodiments and Comparative Embodiments**

| Component s | Embodi ment 1 | Embodi ment 2 | Embodi ment 3 | Embodi ment 4 | Compa rative Embodi ment 1 | Compa rison Embodi ment 2 | Compa rison Embodi ment 3 |
|---|---|---|---|---|---|---|---|
| | Mass fraction (wt %) | | | | | | |
| Glycerin | 5 | 10 | 8 | 5 | 5 | 5 | 5 |
| Propylene glycol | 10 | 8 | 10 | 5 | 10 | 10 | 10 |
| Alkyl benzene sulfonic acid | 20 | 9 | 13 | 15 | 20 | 20 | 20 |
| Monoethan olamine | 2.1 | 1.7 | 0.9 | 1.3 | 2.1 | 2.1 | 2.1 |
| Sodium hydroxide | 3 | 0 | 2 | 3 | 3 | 3 | 3 |
| Ethoxylated fatty alcohol sodium sulfate | 12.5 | 19.8 | 14.8 | 24 | 12.5 | 12.5 | 12.5 |
| Fatty alcohol polyoxyethy lene ether (9EO) | 25 | 17 | 17 | 21 | 25 | 25 | 25 |
| Saturated fatty acid | 3 | 5 | 7 | 3 | 3 | 3 | 3 |
| Oleic acid | 2 | 8 | 3 | 5 | 2 | 2 | 2 |
| Zinc diricinoleat e | 5 | 5 | 8 | 3 | 5 | 5 | / |
| Modified zinc complex | 5 | 0.1 | 10 | 3 | / | / | 5 |
| Zinc lysine | / | / | / | / | 5 | / | / |
| Quercetin - Zinc complex | / | / | / | / | / | 5 | / |
| Nuclease | 0.1 | 5 | 1 | 0.8 | 0.1 | 0.1 | 0.1 |
| Essence | 0.5 | 0.5 | 0.5 | 0.5 | 0.5 | 0.5 | 0.5 |
| Deionized water | Balanc e | Balanc e | Balanc e | Balanc e | Balanc e | Balanc e | Balanc e |

Preparation methods of the liquid detergent compositions in Embodiments 1-4 include the following steps:
L1. zinc diricinoleate and nuclease were added to deionized water according to the mass fractions above to obtain a mixture, the obtained mixture was stirred evenly, and the modified zinc complex was added to the stirred-evenly mixture to obtain a solution 1;
monoethanolamine, sodium hydroxide aqueous solution, glycerol, propylene glycol, alkyl benzene sulfonic acid, ethoxylated fatty alcohol sodium sulfate, fatty alcohol polyoxyethylene ether, saturated fatty acid, oleic acid and essence were added to a reaction kettle and stirred evenly to obtain a solution 2; and
L2. the solution 1 was added to the solution 2 and stirred evenly to obtain a super-concentrated liquid detergent composition for removing odor.
Comparative Examples 1-3 were set based on Embodiment 1, and differences between Comparative Examples 1-3 and Embodiment 1 were as follows: the modified zinc complex was replaced by zinc lysine, quercetin - zinc complex or zinc diricinoleate component was deleted, and the rest components and preparation method were the same as those in Embodiment 1;
the zinc lysine was prepared by using the preparation process of the modified zinc complex, but the step S2 thereof was omitted; and
the quercetin - zinc complex was prepared by using the preparation process of the modified zinc complex, but lysine was not added in the step S1 thereof.

### Test Embodiment 1 Stability test of the detergent compositions

### Test Method:

Test of low-temperature stability: the detergent compositions were separately packed and sealed in bottles, the bottles were placed in an environment at a temperature of -0±2°C for 2 months at the constant temperature, and the detergent compositions were then taken out for immediate observation. Any detergent composition that had neither obvious discoloration, nor stratification nor precipitation was determined to be qualified in low-temperature stability.

Test of constant temperature and humidity stability: the detergent compositions were separately packed and sealed in bottles, the bottles were placed in an environment at a temperature of 37±2°C and a humidity of 75% for 2 months at the constant temperature, and the detergent compositions were then taken out for immediate observation. Any detergent composition that had neither obvious discoloration, nor stratification nor precipitation was determined to be qualified in constant temperature and humidity stability.

Test of normal-temperature stability: the detergent compositions were separately packed and sealed in bottles, the bottles were placed in an environment at a temperature of 25±2°C for 2 months at the constant temperature, and the detergent compositions were then taken out for immediate observation. Any detergent composition that had neither obvious discoloration, nor stratification nor precipitation was determined to be qualified in normal-temperature stability.

Test of high-temperature stability: the detergent compositions were separately packed and sealed in bottles, the bottles were placed in an environment at a temperature of 452°C for 2 months at the constant temperature, and the detergent compositions were then taken out for immediate observation. Any detergent composition that had neither obvious discoloration, nor stratification nor precipitation was determined to be qualified in high-temperature stability.

Test results were shown in Table 2.

**Table 2 Stability Test Results of Detergent Compositions Prepared in Embodiments and Comparative Embodiments**

| Perform ance | Embodi ment 1 | Embodi ment 2 | Embodi ment 3 | Embodi ment 4 | Compar ative Embodi ment 1 | Compar ative Embodi ment 2 | Compar ative Embodi ment 3 |
|---|---|---|---|---|---|---|---|
| Low-tempera ture stability | Qualifie d | Qualifie d | Qualifie d | Qualifie d | Unquali fied Precipit ated | Unquali fied Precipit ated | Qualifie d |
| Consta nt tempera ture and humidit y Stability | Qualifie d | Qualifie d | Qualifie d | Qualifie d | Unquali fied Precipit ated | Unquali fied Precipit ated | Unquali fied Precipit ated |
| Normal-tempera ture stability | Qualifie d | Qualifie d | Qualifie d | Qualifie d | Unquali fied Precipit ated | Unquali fied Precipit ated | Qualifie d |
| Low-tempera ture stability | Qualifie d | Qualifie d | Qualifie d | Qualifie d | Unquali fied Precipit ated | Unquali fied Precipit ated | Unquali fied Precipit ated |

As can be seen from Table 2, the detergent compositions prepared in Embodiments 1-4 have qualified stability when being placed at different temperatures for 2 months. However, in Comparative Embodiments 1-2, the modified zinc complex is replaced, making a stable core-shell structure unable to be formed, the detergent compositions prepared thereby suffer a phenomenon of precipitation due to being affected by surfactant content at different temperatures. In Comparative Embodiment 3, no zinc diricinoleate is added, but the modified zinc complex is introduced instead, and the detergent composition sample prepared thereby also suffers a phenomenon of precipitation in the test.

### Test Embodiment 2 Detergency test of the detergent compositions

The detergent compositions were subjected to a detergency test in accordance with the method as set forth in the *Determination of Detergency and Cycle of Washing Property for Laundry Detergents* (GB/T 13174-2008). The results obtained were shown in Table 3, where R value represented a detergency value; and P value represented a detergency ratio. Generally, standard laundry detergent was taken as a reference sample, the detergency ratio was set to be 1.00, and the higher the P value was, the better the detergency became.

**Table 3 Detergency Test Results of Detergent Compositions Prepared in Embodiments and Comparative Embodiments**

| Sample information | Test concentration (g/L) | Type of test cloth | | |
|---|---|---|---|---|
| | | Carbon black stained cloth | Protein stained cloth (P value) | Sebum stained cloth (P value) |
| Standard laundry detergent | 2 | 1.00 | 1.00 | 1.00 |
| Embodiment 1 | 0.5 | 1.15 | 1.31 | 1.30 |
| Embodiment 2 | 0.5 | 1.17 | 1.39 | 1.39 |
| Embodiment 3 | 0.5 | 1.21 | 1.35 | 1.37 |
| Embodiment 4 | 0.5 | 1.18 | 1.37 | 1.37 |
| Comparative Embodiment 1 | 0.5 | 1.11 | 1.03 | 1.01 |
| Comparative Embodiment 2 | 0.5 | 1.12 | 1.02 | 1.01 |
| Comparative Embodiment 3 | 0.5 | 1.1 | 1.22 | 1.16 |

As can be seen from Table 3, the detergency effects of the detergent compositions in the Embodiments 1-4 on carbon black, protein and sebum stained cloths are significantly better than those of the laundry detergents in Comparative Embodiments 1-3. Surprisingly, it is found that the detergent composition prepared in Comparative Embodiment 3 has a better capability to remove stains on protein and sebum stained cloths than those prepared in Comparative Embodiments 1-2, from which it can be inferred that amino acid substances in the modified zinc complex can generate a synergistic effect with phosphodiesterase, which plays a role in decomposing such three substances as carbohydrate, sebum and protein, so that the detergent composition has obvious detergency effect on protein and sebum stained cloths.

### Test Embodiment 3 Deodorization capacity test of the detergent compositions

The test method includes the following steps: 1. 2 identical pieces of 10 cm×10 cm sweaty cotton cloth (sweaty T-shirts purchased from China Research Institute of Daily Chemical Industry) were prepared and weighed before being washed; 2. a basin in proper size was prepared, 1000 g of tap water and 2.00 g of ordinary laundry detergent were added into the basin; 3. the weighed cloth pieces were placed into the basin and soaked for 2 min, the front and back sides of the cloth pieces were rubbed 30 times, respectively, and water in the cloth pieces was then wrung out, with the liquid containing rate controlled to be 150% - 160%; 4. the wrung cloth pieces were rinsed twice in 1 L of tap water, the front and back sides of the cloth pieces were rubbed 30 times, respectively, water in the cloth pieces were wrung out, with the liquid containing rate controlled to be 150% -160%, and the wrung cloth pieces were finally dried naturally; and 5. the dried sweaty cloth pieces were subjected to deodorization evaluation.

Deodorization results and evaluation: 10 evaluators were selected to perform odor evaluation on the cloth pieces washed with the test samples. The odorous (sweaty) cloth piece before being washed was taken as a reference to determine a residual odor degree of the (sweaty) cloth piece after being washed. The washed cloth piece was scored through wet smelling (smelling before being dried) and dry smelling (smelling after being dried), 50 scores was regarded as a full score and was divided into three grades as follows: 0-10 scores was evaluated as basically odorless; 10-30 scores was evaluated as slightly odorous; and 30-50 scores was evaluated as obviously odorous; when an average score ranged from 0 to 10, it would be concluded that the sample could effectively remove odor (sweaty).

The cotton cloth piece just washed but not dried was set as a deodorization evaluation point 1, the cotton cloth piece dried was set as a deodorization evaluation point 2, the cotton cloth piece stored in a sealed bag for 2 weeks was set as a deodorization evaluation point 3, and the evaluators were asked to evaluate the deodorization effect for the three evaluation points and give scores, respectively. An average of all scores was taken as the final test result.

**Table 4 Deodorization Test Results of Detergent Compositions Prepared in Embodiments and Comparative Embodiments**

| Sample | Deodorization effect score of the deodorization evaluation point 1 | Deodorization effect score of the deodorization evaluation point 2 | Deodorization effect score of the deodorization evaluation point 3 |
|---|---|---|---|
| Embodiment 1 | 1 | 2 | 5 |
| Embodiment 2 | 2 | 2 | 6 |
| Embodiment 3 | 5 | 3 | 9 |
| Embodiment 4 | 7 | 4 | 8 |
| Comparative Embodiment 1 | 30 | 35 | 40 |
| Comparative Embodiment 2 | 25 | 22 | 40 |
| Comparative Embodiment 3 | 22 | 17 | 32 |

As can be seen from Table 4, the detergent compositions prepared in Embodiments 1-4 are capable of not only removing odors, but also inhibiting the repeated growth of odors during sealed storage of the odors. The amino acid substances and halide added in the modified zinc complex, on one hand, play a role in catalyzing the nuclease, and on the other hand, guarantee the activity of the nuclease when the modified zinc complex is stored in an environment with rich surfactants. The detergent compositions prepared in Comparative Embodiments 1-3 are difficult to form a stable cross-linked structure, which inhibits the nuclease in an environment with rich surfactants. The compound of the zinc complex, zinc ricinoleate and nuclease in the present invention can react with a variety of odorous molecules, such as hydrogen sulfide, mercaptan, thioether, formaldehyde, isovaleric acid, ammonia, and the like, so that the odor can be removed fundamentally, and the repeated generation of the odor can be prevented.

### Test Embodiment 4 Collar cleaning capacity test of the detergent compositions

The test method was as follows: 2 pieces of identical cotton clothes (sweaty T-shirts purchased from China Research Institute of Daily Chemical Industry) were placed in a sealed bag and then aged in a 45-degree oven for 2 h, 10 g of super-concentrated laundry detergent was added into a pulsator washing machine, a mixed washing mode was selected to wash the clothes inside it, and the clothes dried were evaluated.

Results and evaluation: 10 evaluators were selected to evaluate the yellowing area of the T-shirt collar washed with the test sample. A T-shirt without yellowing was taken as a reference, and the yellowing degree of the collar of the T-shirt washed was evaluated. The yellowing area of the collar of the T-shirt was scored, 5 scores was regarded as a full score of the clothes washed and was divided into three grades as follows: 0-2 scores was evaluated as no yellowing at all; 1-3 scores was evaluated as slightly yellowing; and 3-5 scores was evaluated as obvious yellowing; when 80% of the evaluators determined that no yellowing residue was identified, it would be concluded that the sample could effectively remove the yellowing. An average of all scores was taken as the final test result.

**Table 5 Collar Yellowing Cleaning Capacity Test Results**

| Sample | Embodiment 1 | Comparative Embodiment 1 | Comparative Embodiment 2 | Comparative Embodiment 3 |
|---|---|---|---|---|
| Yellowing removal score | 1 | 3.2 | 3.1 | 2.6 |

As can be seen from Table 5, the zinc ricinoleate, the modified zinc complex and the nuclease in the embodiments can penetrate deeply into the fibers of clothing to remove human body secretions and other stains, reduce yellowing caused by oxidation of the stains, and have good purification capability, which is obviously superior to those of Comparative Embodiments 1-3 in which specific components are replaced or deleted.

For those skilled in the art, it is apparent that the present invention is not limited to the details of the above exemplary embodiments, and the present invention may be implemented in other specific forms without departing from the spirit or basic features of the present invention. Therefore, the embodiments should be regarded as illustrative and non-restrictive no matter from which point of view. The scope of the present invention is defined by the appended claims rather than the above specification, and therefore, it is intended that all changes which fall within the meaning and scope of equivalency of the claims are embraced in the present invention.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

## Claims

1. A super-concentrated liquid detergent composition for removing odor, comprising the following components in percent by weight:
| | |
|---|---|
| A surfactant | 50-80 wt% |
| Zinc diricinoleate | 0.1-10 wt% |
| A modified zinc complex | 0.1-10 wt% |
| Nuclease | 0.1-5 wt% |
| An auxiliary agent | 0.1-10 wt% |
| A solvent | |
wherein the modified zinc complex is obtained by reaction of flavone, zinc ions, amino acid and halide.

2. The super-concentrated liquid detergent composition for removing odor according to claim 1, wherein a preparation method of the modified zinc complex comprises the following steps:
S1. adding lysine and potassium chloride to deionized water, and stirring evenly;
S2. adding flavone and stirring to obtain a mixed solution; and
S3. adding zinc ions to the mixed solution, carrying out ultrasonic treatment, and centrifuging and drying to obtain a modified zinc complex.

3. The super-concentrated liquid detergent composition for removing odor according to claim 2, wherein the flavone is selected from rutin, quercetin, baicalein, baicalin, glucoside, nobiletin and myricetin.

4. The super-concentrated liquid detergent composition for removing odor according to claim 2, wherein a mass ratio of the zinc ions to the amino acids to the halides and to the flavone is (0.1-10) : (0.1-5): (0.05-3) : 1.

5. The super-concentrated liquid detergent composition for removing odor according to claim 2, wherein the amino acid is selected from one or more of glycine, alanine, phenylalanine, glutamic acid, sarcosine, arginine, lysine and histidine.

6. The super-concentrated liquid detergent composition for removing odor according to claim 2, wherein the halide is selected from at least one of fluoride and chloride.

7. The super-concentrated liquid detergent composition for removing odor according to claim 1, wherein the surfactant is selected from one or more of an anionic surfactant, a nonionic surfactant, an amphoteric surfactant, a cationic surfactant and fatty acid.

8. The super-concentrated liquid detergent composition for removing odor according to claim 1, wherein the nuclease is selected from one or more of ribonuclease and deoxyribonuclease.

9. The super-concentrated liquid detergent composition for removing odor according to claim 1, wherein the auxiliary agent is selected from one or more of a preservative, a pH regulator, a chelating agent, an essence and a pigment.

10. A preparation method of the super-concentrated liquid detergent composition for removing odor according to claim 1, comprising the following steps:
L1. adding the zinc diricinoleate and the nuclease to deionized water to obtain a mixture, and stirring the mixed solution evenly to add the modified zinc complex to obtain a solution 1;
adding alkali and the surfactant to a reaction kettle and stirred evenly to obtain a solution 2; and
L2. adding the solution 1 to the solution 2 and stirring evenly to obtain a super-concentrated liquid detergent composition for removing odor.
